# EUROPÄISCHE PATENTSCHRIFT

(11) **EP 1 380 326 B1**
(45) Veröffentlichungstag und Bekanntmachung des Hinweises auf die Patenterteilung: **05.10.2005**
(21) Anmeldenummer: 02015244.3
(22) Anmeldetag: 09.07.2002
(51) Int. Cl.: A63H 19/24, H02J 13/00

(54) **Verfahren und Vorrichtung zur digitalen Steuerung von elektrischen Verbrauchern einer Modelleisenbahnanlage**
Method and device for digitally controlling electrical apparatus of a model train system
Procédé et dispositif de commande numérique d'appareils électriques d'une installation de train modèle réduit

(43) Veröffentlichungstag der Anmeldung: 14.01.2004
(73) Patentinhaber: Lenz Elektronik GmbH, 35398 Giessen (DE)
(72) Erfinder: Lenz, Bernd, 35398 Giessen (DE)
(74) Vertreter: Grünberg, Thomas

(56) Entgegenhaltungen:
- DE-A- 10 011 978
- US-A- 5 896 017

## Beschreibung

Die Erfindung betrifft ein Verfahren und eine Vorrichtung zur digitalen Steuerung von elektrischen Verbrauchern einer Modelleisenbahnanlage, bei welcher Steuerung die Verbraucher durch eine am Gleis anliegende Rechteckspannung mit Energie versorgt und durch Modulation dieser Rechteckspannung entsprechend einer digitalen Steuerinformation gesteuert werden und bei welcher Steuerung ein Verbraucher nach Empfang einer für ihn bestimmten Steuerinformation das Gleis mit einem Rücksendesignal beaufschlagt. Bei der Modulation dieser kombinierten Steuer- und Versorgungsspannung, die auch Gleissignal genannt wird, handelt es sich vorzugsweise um eine Impulslängen- und/oder Frequenzmodulation. Hierzu ist eine an das Gleis angeschlossene Steuereinrichtung vorgesehen, die die Rechteckspannung entsprechend der digitalen Steuerinformation moduliert und auf diese Weise die Verbraucher nicht nur mit Energie versorgt, sondern auch steuert. Im Verbraucher ist zusätzlich zu einer Empfangseinrichtung für die Steuerinformation eine vorzugsweise in die Empfangseinrichtung integrierte Rücksendesignal-Erzeugungseinrichtung vorgesehen, deren erzeugtes Rücksendesignal über das Gleis rückübertragen wird. Mit anderen Worten betrifft die Erfindung ein Verfahren und eine Vorrichtung, die einen bidirektionalen Datenverkehr bei digital gesteuerten Modelleisenbahnen ermöglichen.

Unter der Bezeichnung Rechteckspannung wird hier eine Spannung mit einem bezogen auf die Grundfrequenz dieser Spannung rechteckförmigen Verlauf, also eine Spannung mit einem annähernd rechteckförmigen Verlauf verstanden. Grundsätzlich ist die vorliegende Erfindung auch auf andere Spannungsformen, beispielsweise eine Spannung mit einem sinusförmigen Verlauf, anwendbar, jedoch ist dann die Modulation mit der digitalen Steuerinformation und dementsprechend auch die Demodulation aufwendiger. Im übrigen setzen die weiter unten erwähnten NMRA-Standards einen rechteckförmigen Spannungsverlauf voraus.

Eine derartige Steuerung mit Rücksendesignalerzeugung ist aus der DE 100 11 978 A1 bekannt und wurde entwickelt, um der zunehmenden Forderung zu entsprechen, Informationen von angeschlossenen Verbrauchern auf der Modelleisenbahnanlage zurück zur Steuereinrichtung oder zu Anzeige- und Bedienkomponenten zu senden. In den elektrischen Verbrauchern sind Empfänger für die digitale Steuerinformation vorgesehen. Es kann sich sowohl um bewegliche Verbraucher (in der Regel Lokomotiven) als auch stationäre Verbraucher handeln (beispielsweise Weichenstellglieder), wie in der DE 100 11 978 A1 im einzelnen ausgeführt ist. Die zurückgesandte Information kann eine Lokomotivadresse, eine aktuelle Geschwindigkeit, eine Motortemperatur usw. umfassen. Verknüpft man diese Informationsdaten mit einem Gleisabschnitt, in dem sie vom dort befindlichen Verbraucher empfangen wurden, so ermöglicht dies eine einfache Lokalisierung von beweglichen Verbrauchern durch eine für mehrere Gleisabschnitte vorgesehene zentrale Steuereinrichtung, kurz Steuerzentrale. Steht der Steuerzentrale eine Rücksendung oder auch Rückmeldung z.B. in Form einer Befehlsquittierung zur Verfügung, so werden darüber hinaus die Steuerungsaufgabe für die Modelleisenbahnanlage optimiert und eine komfortablere und sicherere Bedienung ermöglicht.

Die in der DE 100 11 978 A1 aufgezeigte Lösung zur Realisierung von Rückmeldungen wurde so ausgelegt, dass nicht gegen bestehende Normen zur Steuerung von digitalen Modelleisenbahnen verstossen wird und die Funktion der vorhandenen Komponenten nicht beeinträchtigt wird. Die in der DE 100 11 978 A1 und auch in der vorliegenden Anmeldung zugrunde gelegte Normung entspricht dem NMRA DCC Electrical Standard und NMRA DCC Communication Standard für die Übertragung von Daten auf dem Gleis bzw. den Gleisabschnitten der Anlage.

In der DE 100 11 978 A1 handelt es sich bei der dem Gleis zugeführten Versorgungsspannung um eine entsprechend der digitalen Steuerinformation frequenz- und/oder impulslängenmodulierte Rechteckspannung. Das Verfahren der DE 100 11 978 A1 ist dadurch gekennzeichnet, dass ein Verbraucher das Gleis mit einem gegenüber der Frequenz der modulierten Rechteckspannung höherfrequenten Rücksendesignal beaufschlagt und dieses Rücksendesignal unter Synchronisierung auf die Rechteckspannung in flankenfreien Spannungsabschnitten der Rechteckspannung nachgewiesen wird. Dabei wird der Rechteckspannung das höherfrequente Rücksendesignal überlagert. Der Nachweis des Rücksendesignals erfolgt in flankenfreien Spannungsabschnitten gleichen digitalen Pegels, vorzugsweise in durch die Modulation bedingten längeren flankenfreien Abschnitten wie der zweiten Signalhälfte einer Nullinformation bei Verwendung des NMRA DCC Electrical Standards und des NMRA DCC Communication Standards.

Dieses Verfahren erfordert allerdings Mittel zur Erzeugung einer Sende- bzw. Trägerfrequenz, ferner Vorkehrungen, um das rückgesendete Nutzsignal aus dem stets vorhandenen Störspektrum auf dem Gleis zurück zu gewinnen. Beim üblichen Vorhandensein mehrerer voneinander abgetrennter Gleisabschnitte sind aufwendige Filter zur Vermeidung von Übersprechen von rückmeldenden Verbrauchern anderer Gleisabschnitte erforderlich. Die einzelnen Bits des Rücksendesignals sind durch die Synchronisation zeitlich an das Gleissignal gekoppelt. Damit ergibt sich eine Limitierung der Übertragungsmenge und -geschwindigkeit. Pro Gleisbit kann nur ein Rücksendebit gesendet werden. Es besteht die Möglichkeit eines negativen Einflusses auf die Rücksendung durch schon vorhandene Digitalkomponenten auf der Modellbahnanlage, die nicht den Anforderungen für die Rücksendung von Daten entsprechen und das Rücksendesignal zu stark dämpfen.

In einem Steuersystem gemäss der US 6 220 552 B1 werden Störimpulse aus unterschiedlichen Quellen mit entsprechendem Aufwand ausgeblendet, um einzelne Pulssequenzen nachweisen zu können. Der Nachweis und die Auswertung der Pulssequenzen u.a. über die Bestimmung deren Polarität sind aufwendig und kosten Zeit, so dass keine schnelle Datenübertragung möglich ist. Die Leitungsimpedanzen einer in diesem Patent beschriebenen verdrahteten Modellbahnanlage sollen ermöglichen, dass ein Detektor das zu erfassende Signal sowohl direkt vom Gleis als auch von der zentralen Steuerung her empfangen kann. Infolgedessen ist eine eindeutige Zuordnung der Signalrichtung, die für den Nachweis der Pulssequenzen erforderlich ist, nur mit erhöhtem Aufwand möglich.

Der Aufwand zum Verhindern von Übersprechen ist entsprechend hoch. Aufgrund der Kopplung von Einzelbits an das Gleissignal gilt auch hier die oben erwähnte Limitierung.

In einer älteren nicht vorveröffentlichten Anmeldung DE 101 03 202 der Anmelderin der vorliegenden Anmeldung ist eine Rücksendung zum Zwecke der Lokalisierung einer Lokomotive auf einem Gleisabschnitt einer mehrere abgetrennte Gleisabschnitte aufweisenden Modelleisenbahnanlage beschrieben. Dort wird ein wiederum gegenüber der Frequenz der Rechteckspannung höherfrequentes Lokalisierungs-Rücksendesignal der Rechteckspannung unter Synchronisierung auf diese überlagert. Es tritt eine ähnliche Problematik wie bei der DE 100 11 978 A1 auf.

Der vorliegenden Erfindung liegt die Aufgabe zugrunde, ein Verfahren und eine Vorrichtung mit den Merkmalen im Oberbegriff der jeweiligen unabhängigen Ansprüche so zu verbessern, dass der zur Realisierung des Verfahrens bzw. der Vorrichtung erforderliche Hardwareaufwand so gering wie möglich ist.

Diese Aufgabe wird durch den Gegenstand der unabhängigen Ansprüche gelöst. Bevorzugte Weiterbildungen sind in den Unteransprüchen gekennzeichnet.

Erfindungsgemäss werden die modulierte Rechteckspannung, das sogenannte Gleissignal, und damit die Energiezufuhr von der Steuerzentrale zum Gleis für ein kurzes Zeitintervall unterbrochen und vorzugsweise gleichzeitig die Gleisanschlüsse des in diesem Zeitintervall versorgungspannungsfreien Gleises über einen Stromsensor miteinander verbunden. Bei einer Ausführung der Erfindung wird zu diesem Zweck das unterbrochene Gleis kurzgeschlossen bzw. mit einem Stommesswiderstand abgeschlossen. Das Zeitintervall wird als Austastzeit oder Austastlücke bezeichnet, während der das Gleissignal zwischen einer Steuereinrichtung, im allgemeinen einer Steuerzentrale, und dem Gleis für eine vergleichsweise kurze Zeit aufgetrennt wird und während dieser Zeit die von der Steuerzentrale getrennten Gleisanschlüsse zu einem geschlossenen Stromkreis miteinander verbunden werden. Durch die Erzeugung der Austastlücke, d.h. durch das Austasten oder Ausblenden eines Teils der ständig von der Steuerzentrale erzeugten und somit ständig dem Gleis zugeführten Versorgungsspannung, erhält man somit eine elektrisch weitgehend störungsfreie Übertragungsleitung über das Gleis zwischen einem festen oder beweglichen Verbraucher, der mit einer Rücksendesignal-Erzeugungsvorrichtung ausgestattet ist, und einem Messwertaufnehmer oder Sensor, der entweder permanent vorhanden ist oder für die Austastzeit zugeschaltet wird. Während der Austastlücke ist das Gleis als Übertragungsleitung für diese Zeit nicht nur ohne Spannung, sondern auch frei von Störsignalen von den darauf befindlichen Verbrauchern. Dies ist deshalb der Fall, weil alle digitalen Verbraucher über Gleichrichterelemente an das Gleis angeschlossen sind, die ihrerseits verhindern, dass Störungen von im Verbraucher vorhandenen Motoren oder anderen Verbrauchern wie z.B. Lampen auf das Gleis rückwirken können.

Während der Austastlücke werden Informationen von einem durch die digitale Steuerung zuvor angesprochenen Verbraucher, z.B. einem Lokempfänger mit Rücksendesignal-Erzeugungseinrichtung, an eine mit einem Sensor verbundene Auswerteeinrichtung gesendet, die diese Informationen zumindest hinsichtlich eines korrekten Empfangs auswertet und z. B. der zentralen Steuereinheit oder Bedien- oder Anzeigeelementen zuführt und zur Verfügung stellt.

Bevorzugt wird das Rücksendesignal nicht unmittelbar nach Beginn der Austastzeit, sondern beispielsweise um die Dauer eines 1-Bit des oben angesprochenen Datenübertragungsstandards nach NMRA entsprechend 116 µs verzögert, erzeugt und übertragen. Die hat den Vorteil, dass vor dem Anlegen des Rücksendesignals an das Gleis sämtliche Störpotentiale, wie insbesondere induktiv gespeicherte Energie, abgebaut werden können. Ein solcher Abbau wird durch den bevorzugten Kurzschluss bzw. Abschluss an den Gleisanschlüssen über lediglich einen den Abbau nicht wesentlich beeinträchtigenden Stromsensor gefördert.

Die spannungsfreie Übertragungsstrecke erlaubt für das Rücksendesignal eine einfache Datenübertragung, vorzugsweise durch Realisierung mit einer durch einen Leitungsabschluss bzw. Kurzschluss erzeugten Stromschleife, in der ein moduliertes Stromsignal von vorzugsweise 20 mA übertragen wird. Dieses Stromsignal kann mit Hilfe eines Sensors oder Messwertaufnehmers, z.B. eines Widerstandes, aber auch kleinen Impulsübertragers, Trafos, Spulenelements,Hall-Effekt-Bauelements oder dgl., einfach abgefühlt und in einer Auswerteeinrichtung detektiert und ausgewertet werden. Obgleich die Grösse der Stromamplitude prinzipiell frei wählbar ist, wird man die Stromamplitude vernünftiger Weise im Bereich zwischen 1 mA und 100 mA auswählen, um z.B. einerseits eine noch sichere und zuverlässige Detektion mit geringem Kostenaufwand zu ermöglichen und andererseits unnötige Verluste zu vermeiden. Ferner sollte der Strom so begrenzt werden, dass die oben erwähnten Gleichrichter in den digital gesteuerten Verbrauchern nicht in den leitenden Zustand übergehen. Dies ist im übrigen auch ein Grund, weshalb eine Strommodulation und nicht eine Spannungsmodulation für die Rücksendesignalerzeugung und -übertragung bevorzugt wird.

Durch die Bereitstellung der spannnungsfreien Übertragungsstrecke ist es ferner möglich, Informationen mit einer vergleichsweise hohen Datenrate von beispielsweise 100 kBaud und höher zu übertragen. Im Anwendungsbeispiel wird hierfür 125 kBaud gewählt. Um mit der Pulsübertragung nicht zu langsam zu werden, unnötige Energieverluste und eine schwierige Signalaufbereitung zu vermeiden, empfiehlt sich die Datenrate im Bereich von 10 kBaud bis maximal 1 bis 5 Mbaud anzusetzen.

Die Austastung des Gleissignals wird vorzugsweise zwischen dem Ende eines Gleis-Datenpaketes und dem Beginn des nächsten Datenpakets, d.h. zwischen dem Paket-Endbit des einen und vor der Preamble des nächsten Datenpakets, bewirkt. Hierzu könnte man eine Lücke zwischen den Datenpaketen vorsehen. Bevorzugt wird allerdings eine nicht unterbrochene Paketfolge, wobei die Austastlücke durch das Paket-Endbit eines Datenpakets ausgelöst wird und sich in den Beginn der Preamble des nächsten Pakets erstreckt. Auf diese Weise bleibt die Übertragung der digitalen Steuerinformation von der Steuerzentrale zum Verbraucher über das Gleis unbeeinträchtigt und die Steuerzentrale kann in üblicher Weise die modulierte Rechteckspannung kontinuierlich z.B. gemäß den üblichen Standards erzeugen.

Das Zeitintervall, währenddessen das Gleissignal ausgetastet wird, liegt beim jetzigen Standard bevorzugt in der Grössenordnung von ca. 100 bis 500 Mikrosekunden und wird idealer Weise als Vielfaches der Dauer eines 1-Bits gewählt. Im vorliegenden Anwendungsbeispiel ist die Austastzeit vier 1-Bits lang und beträgt damit nominal 464 Mikrosekunden. Falls weniger als 1 Byte rückübertragen werden soll, könnte man auch ein Zeitintervall von weniger als 100 µs ansetzen. Eine vernünftige Obergrenze im Hinblick auf die unterbrochene Versorgung der Verbraucher und das Steuerverhalten liegt bei 1 ms. Hierbei ist auch die Endladung eines bevorzugt verwendeten Pufferkondensators für die Erzeugung des Rücksendesignals und Weiterversorgung des Verbrauchers mit Energie beachtlich, wie weiter unten erläutert ist.

Die Austastzeit hat in den Versuchen der Anmelderin für bisher im Handel verfügbare digitale Verbraucher keine Auswirkungen auf deren Funktion, da Kontaktunterbrechungen zwischen Rad und Schiene, die im normalen Fahrbetrieb ebenfalls auftreten, durch die Bauweise von solchen im Verbraucher vorgesehenen Empfängern schon immer berücksichtigt wurden. Dabei können diese durch den Fahrbetrieb verursachten Unterbrechungen sogar länger dauern als die gewählte Austastzeit und zu einem beliebigen, auch ungünstigen, Zeitpunkt ohne nachteilige Auswirkungen auftreten.

Bezüglich der Rücksendung ergibt sich sowohl auf der Senderseite im Verbraucher als auch in der Auswerteeinrichtung eine Vereinfachung dadurch, dass das Rücksendesignal zeitlich nicht mehr an einzelne Bits des Gleissignals gekoppelt ist und damit keine bitweise Synchronisierung mehr erfolgen muss. Des weiteren ist es jetzt möglich, zur Datenübertragung eine in vielen Mikrocontrollern schon vorhandene Hardware, eine asynchrone serielle Schnittstelle (UART), zum Empfang und zur Weiterübertragung z.B. zur Steuerzentrale zu nutzen. Das Signal des UART kann auch alternativ oder zusätzlich zur Anzeige gebracht werden. Hiermit ergeben sich deutliche Erleichterungen bei der Erstellung der Betriebssoftware eines Lokempfängers/Senders und auch einer Auswerteeinrichtung bzw. eines Detektors.

Wie bereits erwähnt, wird während der Austastlücke ein Lokempfänger von der Steuerzentrale nicht mit Energie versorgt. Die zum Rücksenden benötigte Energie wird bevorzugt dem ohnehin vorhandenen Pufferkondensator entnommen, der bisher ausschliesslich der Überbrückung von Unterbrechungen der Stromversorgung des Lokempfängers aufgrund schlechter Kontakte zur Schiene diente. Durch die kurze Sendezeit des Rücksendesignals wird diese Energiequelle jedoch nicht signifikant belastet. Es ist demnach kein zusätzlicher oder grösserer Energiespeicher im dem Sender des Verbrauchers vorzusehen.

Dadurch, dass die Verbraucher bzw. Lokomotiven in einer Austastlücke unterschiedliche Informationen rücksenden können, ist eine Vielzahl von Anwendungsmöglichkeiten gegeben. Typischerweise werden ein bis drei Bytes rückübertragen.

Wird die rückgesendete Information mit dem Inhalt des der Austastlücke vorangegangenen Gleispaketes verknüpft, so kann zum einen auf sehr einfache Weise die Adresse des Lokempfängers ermittelt werden, zum anderen kann über den einem Gleisabschnitt zugeordneten empfangenden Detektor der Ort, an dem sich die Lokomotive befindet, festgestellt werden. Hierbei wird die Lokalisierung der Lokomotive um so genauer, je mehr Gleisabschnitte vorhanden sind und je mehr Detektoren auf einer Anlage angeordnet werden, wobei jeder Detektor bzw. jede Auswerteeinrichtung einen abgetrennten Gleisabschnitt überwacht. Die Zuordnung einer Lokomotivadresse zu einem Ort erfolgt dadurch, dass eine Auswerteeinrichtung, die eine Lokomotivadresse aus dem Gleissignal ermittelt, eine eindeutige Ortsinformation, z.B. ihre eigene Adresse, einem von ihr erzeugten Signal für die Steuerzentrale hinzufügt und diese Gesamtinformation weiterleitet bzw. zugänglich macht.

Insgesamt schafft die Erfindung eine Schaltungsvereinfachung bei gleichzeitig höherer Datenübertragungsrate, hoher Störsicherheit mit der Möglichkeit der Erzeugung einer Gleisbelegtmeldung, ohne dass vorhandene Komponenten der Anlage das Rücksendesignal negativ beeinflussen.

So entfallen für die erfindungsgemässe Lösung folgende Erfordernisse und Nachteile:
eine Erzeugung einer Träger- bzw. Sendefrequenz und deren Aufmodulation auf das Gleissignal;
der hochfrequente Einfluss bestehender Komponenten und Anlagen auf die Qualität und Detektierbarkeit des Rücksendesignals;
die Kopplung von Rücksendebits an das Gleissignal und damit die Limitierung der zu übertragenden Datenmenge;
die aufwendige Rückgewinnung des Nutzsignales aus einem Störspektrum;
das Problem der eindeutigen Zuordnung einer Rücksendung zum entsprechenden Gleisabschnitt.

Weitere Vorteile sind:
Schon vorhandene Lokomotiven mit digitalen Empfängern, die nicht für die Rücksendung von Daten ausgerüstet sind, beeinflussen das Rücksendesignal nicht;
Um eventuell störende Einflüsse anderer Komponenten zu eliminieren, können diese mit einer einfachen und preiswerten Gleichrichterschaltung versehen werden;
Bestehende Modellbahnanlagen können sehr einfach mit dem vorliegenden Rücksendesystem ergänzt werden, ohne dass Eingriffe an den bestehenden Komponenten wie Steuerzentrale oder Verstärker nötig sind;
Eine "Belegt-Information" für einen Gleisabschnitt kann ohne bisher erforderliche separate Elektronikeinheiten gewonnen werden.

Vorzugsweise sendet immer der Verbraucher, der unmittelbar vor der Austastlücke adressiert wurde.

Bevorzugt wird der erzeugte Bitstrom unabhängig von seiner Polarität in eine direkt für UARTs geeignete Form hinsichtlich Pegel und Polarität umgewandelt.

Zum Erzeugen einer Austastlücke weist jede Auswerteeinrichtung vorzugsweise eine Einrichtung zum Trennen des Gleises von der Steuerzentrale und eine Einrichtung zum Kurzschliessen des von der Steuerzentrale getrennten Gleises auf, die das Gleis für den Zeitraum dieser Austastlücke zu einer für die Übertragung von Daten geeignete Übertragungsstrecke macht.

Vorzugsweise erfolgt eine Datenübertragung durch Amplituden- und/oder Frequenzmodulation eines Stromsignals.

Im folgenden werden Ausführungsbeispiele der Erfindung anhand der Zeichnungen näher erläutert. Es zeigen
Fig. 1 eine Anordnung der Austastlücke vor einem Datenpaket nach NMRA-Standard;
Fig. 2 den Signalverlauf im Bereich der Austastlücke, wobei während der Lücke die ausgeblendeten "1"-Bits der Preamble durch Punktierung angedeutet sind;
Fig. 3 ein Blockschaltbild eines Ausführungsbeispiels für die erfindungsgemässen Merkmale im Verbraucher;
Fig. 4 ein Blockschaltbild eines Ausführungsbeispiels für die erfindungsgemässen Merkmale in einer Auswerteeinrichtung;
Fig. 5 ein Funktionsschaltbild zu einem Unterbrecher und einem geschalteten Messwiderstand aus Fig. 4;
Fig. 6 ein Blockschaltbild eines weiteren Ausführungsbeispiels für die erfindungsgemässen Merkmale in einer Auswerteeinrichtung; und
Fig. 7 ein Funktionsschaltbild zu einem Unterbrecher und Messwiderstand mit Begrenzung aus Fig. 6.

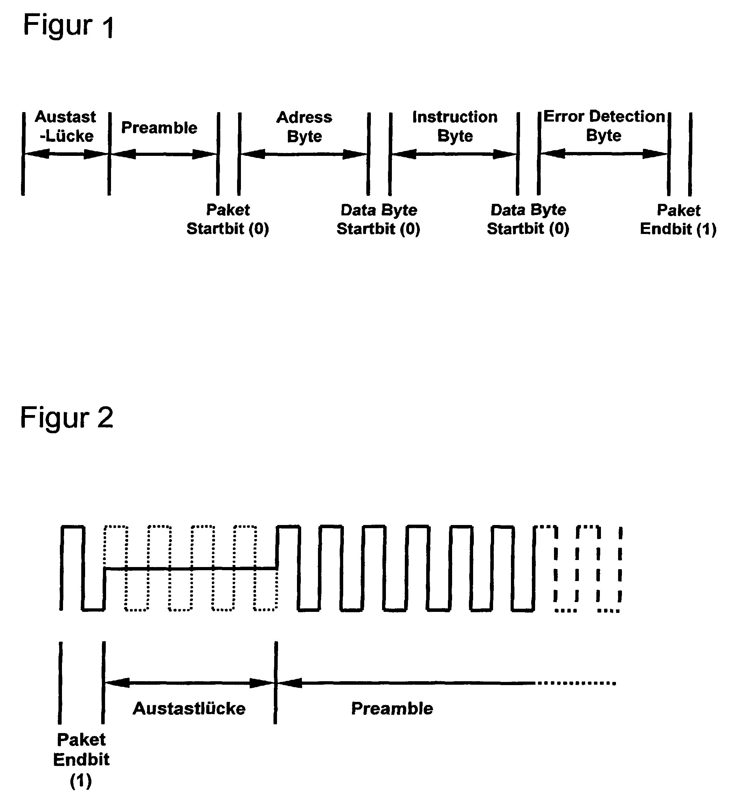

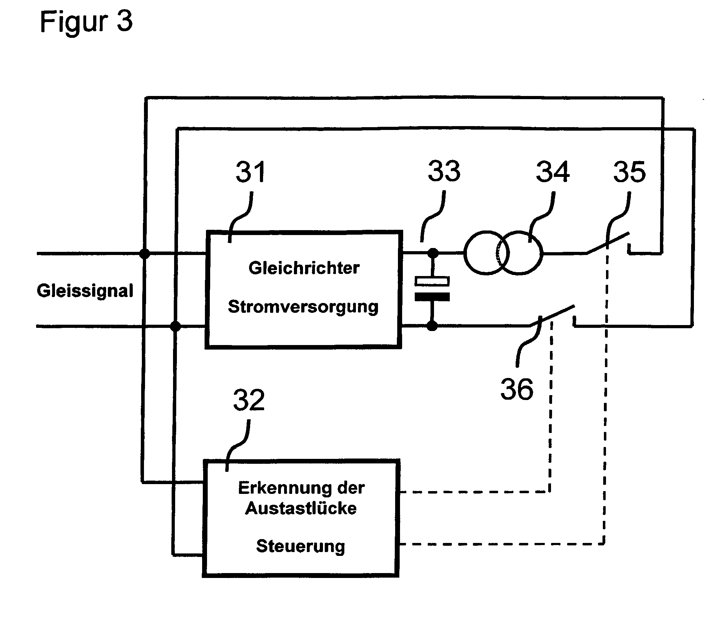

Bei der Übertragung digitaler Informationen nach NMRA-Standard von einer Steuerzentrale (nicht dargestellt) zu einem Verbraucher bzw. Empfänger eines Verbrauchers (Lokomotivenempfänger oder stationärer Empfänger gemäss Fig.3) wird zur Codierung der Bitwerte 0 und 1 das in FIG.1 dargestellte Schema benutzt, in dem auch die Austastlücke für Rücksendesignale nach der Erfindung vor der Preamble gezeigt ist. Die Preamble ist ein Vorspann für ein Datenpaket und besteht aus einer Folge von wenigstens zehn "1 "-Bits, meistens jedoch 14 oder mehr. Das Paket-Startbit ist das erste "0"-Bit, das einem Vorspann folgt. Es beendet den Vorspann und signalisiert, dass die nächsten Bits ein Adressbyte darstellen. Nach Übertragung des Adressbytes folgt wiederum ein "0"-Bit als Kennzeichnung für ein folgendes Datenbyte in Form eines Data Byte-Startbits. Das Error Detection Byte dient zur Erkennung von Übertragungsfehlern. Das Paket-Endbit am Ende eines Datenbytes kennzeichnet das Ende des Datenpakets und ist ein "1"-Bit.

Obgleich die vorliegende Erfindung für die Datenübertragung im NMRA DCC Electrical Standard und NMRA Comunication Standard realisiert wurde und hier anhand dieser Standards erläutert wird, ist sie auch auf andere Formen der digitalen Datenübertragung von Information von einer Steuerzentrale zu einem Verbraucher in einer digitalen Modelleisenbahnanlage anwendbar, wenn gleichzeitig Energie über dieselbe Verbindung wie Steuerinformation übertragen werden soll. Dies gilt beispielsweise für Normen mit Impulsbreitenmodulation statt der bei den obigen Standards verwendeten Frequenzmodulation. In der Regel wird normunabhängig ein Informationspaket, welches an einen Verbraucher auf dem Gleis gesendet wird, grundsätzlich dessen Adresse enthalten, so dass hierüber der Adressat der Daten feststeht. Die Erfindung wäre allerdings vom Grundsatz her auch auf ein Steuersystem anwendbar, in dem eine feste Anzahl möglicher Verbraucher in einer vorbestimmten Reihenfolge zyklisch angesprochen wird.

Bei einer nach der Erfindung bevorzugten Ausführung nach Fig. 2 fällt die Austastlücke in die Preamble. Wie aus Fig. 2 ersichtlich, schliesst sich die Austastlücke unmittelbar an das Paket-Endbit des jeweils vorangegangenen Pakets an und hat bei dem gezeigten Beispiel ein Länge von vier "1"-Bits der Preamble. D.h. es werden die ersten vier Bits der Preamble zugunsten der Austatslücke durch die erfindungsgemässe Unterbrechung der Versorgungsspannung ausgeblendet. Bei dieser bevorzugten Ausführung wird die übliche direkte Aufeinanderfolge der Datenpakete durch die Austastlücke nicht geändert. Bevorzugt ist in der Preamble jedes Datenpakets die Austastlücke vorgesehen. Wie bereits oben dargelegt, wird die Rücksendung gegenüber dem Beginn der Austastlücke verzögert bewirkt, so dass sich die besagten Störungen auf dem Gleis vor dem Aussenden des Rücksendesignals abbauen können. Dies ist bei der Gesamtlänge der Austastlücke zu berücksichtigen, die vorzugsweise um diese Zeit länger als die eigentliche Rücksendezeit ist.

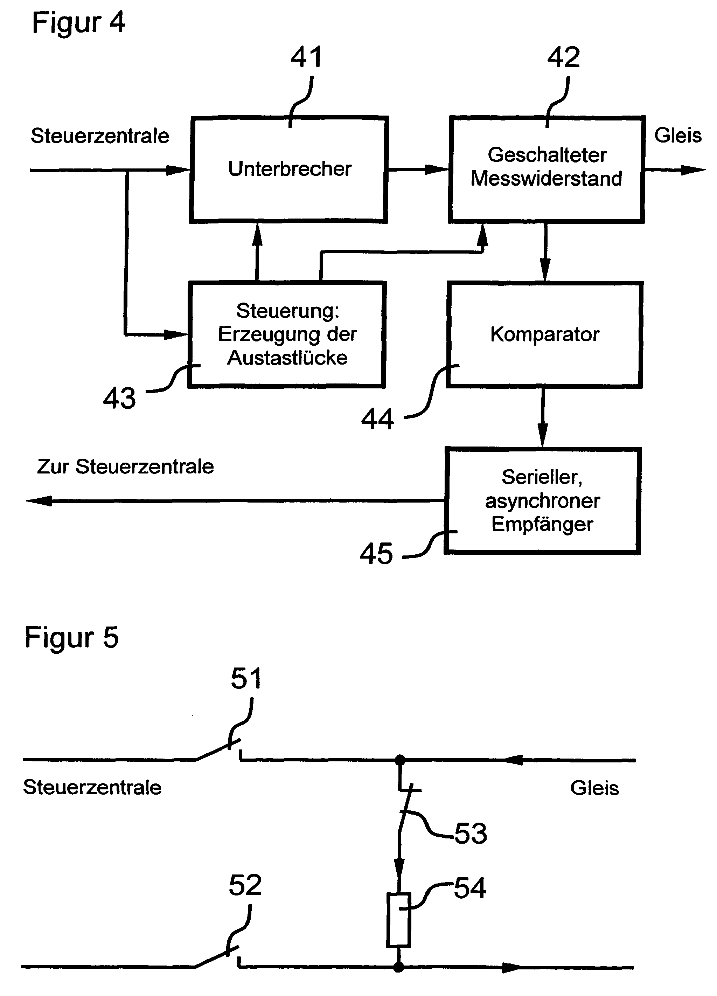

Eine Auswerteeinrichtung gemäss Fig. 4 dient sowohl zur Erzeugung der Austastlücke als auch zum Auswerten und Weiterleiten des in dieser Lücke erzeugten Rücksendesignals. Die dargestellte Auswerteeinrichtung umfasst eine Erzeugungseinrichtung 43 für die Austastlücke. Diese ist mit der nicht dargestellten Steuerzentrale verbunden und erhält im gezeigten Ausführungsbeispiel das Gleissignal, aus dem sie ein Paket-Endbit detektiert (Fig.2) und darüber den Beginn für die Austastlücke festlegt. Alternativ könnte sie auch direkt von der Steuereinrichtung ein entsprechendes Steuersignal zur Erzeugung der Austastlücke erhalten. Bevorzugt wird allerdings die erstere Lösung, weil die Erzeugungseinrichtung 43 aus dem Gleissignal auch die Adresse des im vorausgehenden Datenpaket adressierten Verbrauchers ermitteln kann. Die Erzeugungseinrichtung 43 enthält somit vorzugsweise Mittel zum Detektieren des Gleissignals.

Die Erzeugungseinrichtung 43 steuert eine Unterbrechungseinrichtung 41, mit der die zeitweise Abtrennung der Versorgungsspannung vom Gleis während der Austastlücke bewirkt wird. Darüber hinaus ist die Erzeugungseinrichtung 43 mit einem Sensor in Form eines geschalteten Messwiderstandes 42 verbunden, um das durch den Unterbrecher von der Steuerzentrale getrennte Gleis mit dem Messwiderstand abzuschliessen. Hierfür kann dasselbe Steuersignal wie für die Unterbrechungseinrichtung 41 verwendet werden.

Die Fig. 5 zeigt eine Ausführungsfrom der Unterbrechungseinrichtung 42 und des geschalteten Widerstandes 42. Danach ist in beiden Gleisanschlüssen jeweils ein Unterbrechungsschalter 51, 52 vorgesehen. Hinter diesem Trennschalter von der Steuerzentrale aus gesehen, ist ein Messwiderstand 54 in Serie mit einem "Kurzschlussschalter" 53 vorgesehen, wobei die abgetrennten Gleisanschlüsse durch diese Serienschaltung abgeschlossen bzw. verbunden sind. Im Ausführungsbeispiel beträgt der Wert des Messwiderstandes 100 Ohm entsprechend einem Abschlusswiderstand für eine Zweidrahtleitung. Die gezeigten Gleisanschlüsse sind in üblicher Weise an das nicht dargestellte Gleis angeschlossen.

Die Erzeugungseinrichtung 43 kann das Ende der Austastlücke auf unterschiedliche Art und Weise festlegen, nämlich durch Auswertung des Gleissignals, beispielsweise durch Abzählen von Bits der Preamble, ferner durch einen internen Zeitgeber oder durch ein Steuersignal von der Steuerzentrale. Am Ende der Austastlücke werden der Messwiderstand 54 durch Öffnen des Schalters 53 wieder abgetrennt und die Unterbrechungsschalter 51, 52 werden wieder geschlossen.

Innerhalb der Austastlücke misst der zugeschaltete Messwiderstand 54 das weiter unten erläuterte Rücksendesignal, das bevorzugt aus einer Folge von Stromimpu-Isen besteht. In einem Komparator 44 wird in üblicher Weise das vom Messwiderstand 54 gelieferte Messsignal einem Schwellenwertvergleich unterzogen und gelangt dann zu einem seriellen asynchronen Empfänger/Sender 45, vorzugsweise in Form eines UART, der das in obiger Weise erfasste und aufbereitete Rücksendesignal an die Steuerzentrale weitergeleitet.

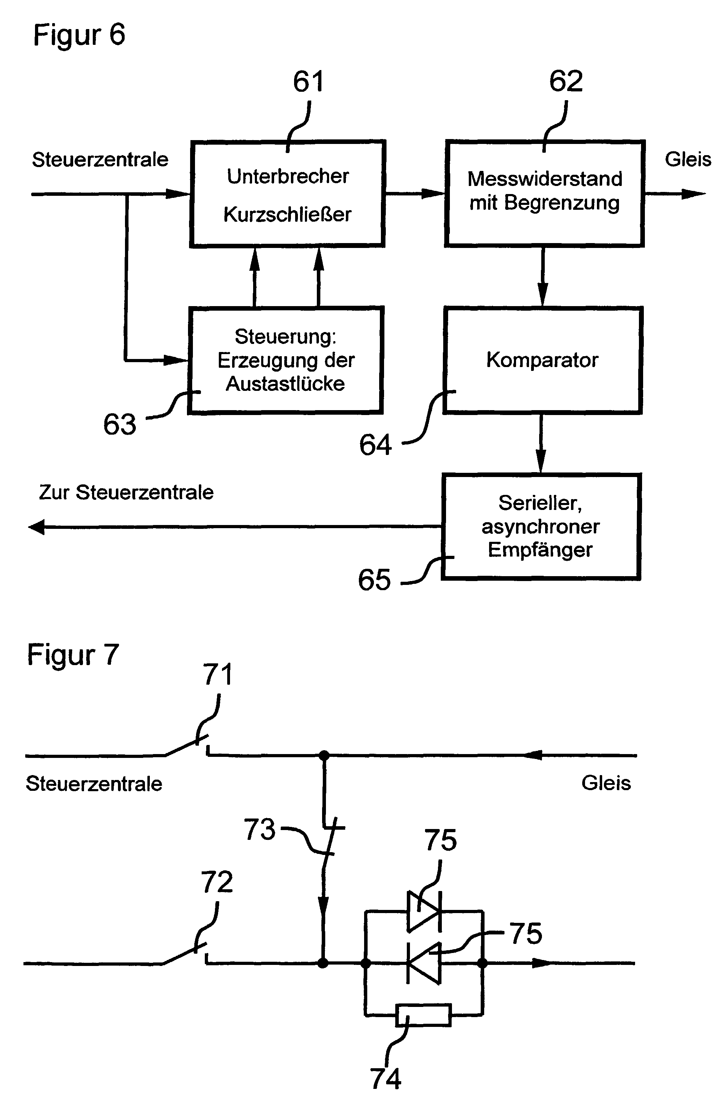

In Fig. 6 und 7 ist eine bevorzugte Ausbildung einer Auswerteeinrichtung dargestellt. Die Auswerteeinrichtung enthält eine Erzeugungseinrichtung 63, einen Komparator 64 und einen seriellen asynchronen Empfänger/Sender UART 65 entsprechend den Komponenten 43, 44 und 45 in Fig. 4. Wie aus Fig.7 hervorgeht, liegt hier der Messwiderstand 74 permanent im Gleisanschluss und zwar parallel zu zwei antiparallel geschalteten Begrenzerdioden 75, 75, wobei hier die Komponenten 74, 75 den Messwiderstand 62 mit Begrenzer der Fig.6 bilden. Die Dioden dienen zum Schutz des Messwiderstandes gegenüber den im Vergleich zum Rücksendesignal hohen Stromamplituden der Versorgungsspannung, die ausserhalb der Austastlücken auftreten. Eine Unterbrechnungs- und Kurzschliesseinrichtung 61 umfasst zwei Unterbrechungsschalter 71, 72 und einen Kurzschlussschalter 73, mit dem die abgetrennten Gleisanschlüsse in der gezeigten Weise miteinander verbunden werden können.

Der Vorteil der Ausführung nach den Figuren 6 und 7 besteht darin, dass der permanent zugeschaltete Messwiderstand 62 gleichzeitig zur Erzeugung einer Belegtmeldung herangezogen werden kann. Eine solche Belegtmeldung wird durch Erfassen des Messsignals am Widerstand 62 ausserhalb der Austastlücke erzeugt.

Die Auswerteeinrichtung z.B. nach Fig. 4 und 6 kann stationär auf der Anlage beispielsweise in einen Leistungsverstärker oder die Steuerzentrale integriert sein oder als eigenständiges Gerät vorgesehen sein.

Eine mögliche Ausführung eines Verbrauchers in Form eines Lokempfängers mit Rücksendung ist in Figur 3 dargestellt. Der Verbraucher umfasst eine übliche Gleichrichter- und Stromversorgungseinrichtung 31 mit Pufferkondensator 33, wie weiter oben erwähnt. Die nicht erfindungswesentliche Motoransteuerung ist nicht gezeigt. Der Gleichrichter- und Stromversorgungseinrichtung 31 wird wie üblich das Gleissignal (Fig.1 und 2) zugeführt. Das Gleissignal wird ausserdem einer Erkennungs- und Steuereinrichtung 32 im Verbraucher zugeführt. Diese wertet das Gleissignal so wie die Erzeugungseinrichtung 43 der Fig.4 aus, um Anfang und Ende bzw. Länge der Austastlücke festzulegen und entsprechende Steuersignale für Verbindungsschalter 35, 36 zu erzeugen. Im geschlossenen Zustand verbinden diese beiden Schalter 35, 36 eine Stromquelle 34 über den Pufferkondensator 33 mit dem Gleis. Die Stromquelle 34 ist eine entsprechend der Rücksendeinformation getastete Stromquelle. Im vorliegenden Ausführungsbeispiel nach Fig.3 wird während der Erzeugung des Rücksendesignals beispielsweise der Schalter 36 ständig geschlossen gehalten und die Modulation der Stromquelle 34 erfolgt durch die Tastung des Schalters 35. Ausserhalb der Austastlücke sind die Schalter 35, 36 ständig geöffnet.

Vorzugsweise wird das Gleissignal von einem im Empänger des Verbrauchers vorgesehenen Microcontroller ausgewertet. Der Microcontroller verfügt nicht nur über die so gewonnene zeitliche Information zur Erzeugung der Austastlücke und des Rücksendesignals, sondern auch über die Information, die mittels des Rücksendesignals gesendet werden soll. Der Microcontroller ist in den Figuren nicht dargestellt und kann z.B. in der Erkennungs- und Steuereinrichtung 32 vorgesehen sein. Der üblicher Weise in heutigen Microcontrollern vorhandene UART kann zur Betätigung der Schalter 35 und 36 und zur Aussendung des Rücksendesignals in Form eines Bitstroms verwendet werden.

Durch die bevorzugte Strommodulation wird somit ein Bitstrom erzeugt, der im vorliegenden Ausführungsbeispiel mit Hilfe der UARTs, die in den Microcontrollern der Auswerteeinrichtungen (Fig. 4 und 6) vorhanden sind, empfangen und dabei auf Gültigkeit und richtigen Datenempfang geprüft bzw. ausgewertet und weitergeleitet wird. Bedarfsweise kann auch der Inhalt des Rücksendesignals ausgewertet werden.

Im Ausführungsbeispiel werden in der Austastlücke bei einer Übertragungsrate von 125 kBaud drei Datenbytes über das Gleis übertragen und vom UART der Auswerteeinrichtungen 45, 46 empfangen. Die Weiterleitung des vom UART innerhalb der Austastlücke empfangenen Bitstroms erfolgt dann außerhalb der Austastlücke, zweckmässiger Weise noch während desselben Datenpakets aus Zuordnungsgründen.

Die Übertragung des Rücksendesignals über das Gleis erfolgt hier als Stromsignal mit 20 mA Amplitude. Die Austastlücke beträgt vier 1-Bitzeiten, d.h. 464 Mikrosekunden. Dabei wird erst nach Ende des ersten 1-Bits nach Beginn der Austastlücke mit der Datenübertragung begonnen. Damit wird sichergestellt, dass Induktivitäten, die aufgrund der Struktur der Modellbahnanlage vorhanden sind, sich entladen können, wie weiter oben bereits dargelegt.

Prinzipiell könnte man anstelle der modulierten Stromquelle auch eine modulierte Spannungsquelle zur Erzeugung des Rücksendesignals verwenden, was sowohl hinsichtlich Erzeugung als auch Nachweis des Signals in der Auswerteeinrichtung jedoch aufwendiger ist als eine Strommodulation. Hier könnte der Kurzschluss bzw. ein Abschluss mit einem niederohmigen Strommesswiderstand oder die Verbindung der beiden Gleisanschlüsse über einen Stromsensor allgemein entfallen, wobei man allerdings den Vorteil einer schnellen Beruhigung von Störsignalen verliert.

Abweichend von den Ausführungen in Fig. 5 und Fig. 7 kann nur einer der beiden Gleisanschlüsse unterbrochen werden (wobei es sich beim anderen Leiter um eine durchgängige Masseleitung handeln kann), so dass in diesem Fall nur ein Unterbrechungsschalter erforderlich ist.

Wie bereits in dem eingangs aufgezeigten Stand der Technik und auch weiter oben erwähnt, kann die Erfindung auch auf eine Anlage mit mehreren galvanisch abgetrennten Gleisabschnitte angewandt werden, die alle mit einer Steuerzentrale verbunden sind. In diesem Fall sind jedem abgeteilten Gleisabschnitt eine Unterbrechungseinrichtung und eine Rücksignalerfassungseinrichtung bzw. Auswerteeinrichtung zuzuordnen.

Im übrigen wertet auch bei der vorliegenden Erfindung der Verbraucher das Gleissignal in an sich bekannter Weise fortwährend aus und setzt die Steuerinformation von an ihn adressierten Datenpaketen um. Damit kann der Verbraucher in der gleichen Weise wie die Auswerteeinrichtung die Rechteckspannung am Gleis zur Erzeugung des Rücksendesignals nutzen. So kann der Verbraucher z.B. seine eigene Adresse mit in das Rücksendesignal einbeziehen. Die Auswerteeinrichtung kann diese Adresse zur Erzeugung eines Belegtsignals heranziehen, welches sie der Steuerzentrale oder auch anderen Einrichtungen zur Verfügung stellt. Auch kann jede Auswerteeinrichtung eine eigene Adresse haben, die sie mit einem Rücksendesignal verknüpft und weiterleitet. Kommt das Rücksendesignal von einer im vorausgehenden Datenpaket adressierten Lokomotive, so kann zusammen mit der Adresse des Gleissignalabschnitts auch ein Belegtsignal gewonnen werden.

## Patentansprüche

1. Verfahren zur digitalen Steuerung von elektrischen Verbrauchern einer Modelleisenbahnanlage, in welchem die mit einem Gleis in Verbindung stehenden Verbraucher durch eine an das Gleis gelegte Rechteckspannung mit Energie versorgt und durch Modulation dieser Rechteckspannung entsprechend einer digitalen Steuerinformation gesteuert werden und ein Verbraucher das Gleis mit einem Rücksendesignal beaufschlagt, **dadurch gekennzeichnet, dass** die Versorgung der Verbraucher mit Energie und digitaler Steuerinformation durch die Rechteckspannung über das Gleis während eines vorbestimmten Zeitintervalls unterbrochen wird, dass der Verbraucher das rechteckspannungsfreie Gleis innerhalb dieses vorbestimmten Zeitintervalls mit dem Rücksendesignal beaufschlagt und dass das über das Gleis übertragene Rücksendesignal von einem dem Gleis zugeordneten Sensor erfasst wird.

2. Verfahren nach Anspruch 1, bei dem die Unterbrechung der Energieversorgung durch Trennen des Gleises von einer die modulierte Rechteckspannung erzeugenden Steuereinrichtung erfolgt.

3. Verfahren nach Anspruch 1 oder 2, bei dem bei unterbrochener Energieversorgung ein Übertragungsstromkreis für das Rücksendesignal durch Verbinden von unterbrochenen Gleisanschlüssen über einen Stromsensor hergestellt wird.

4. Verfahren nach einem der vorhergehenden Ansprüche, bei dem die digitale Steuerinformation durch aufeinander folgende Steuerpakete übertragen wird und das vorbestimmte Zeitintervall zwischen zwei aufeinanderfolgende Steuerpakete oder in einen Anfangsabschnitt einer Preamble eines Steuerpakets gelegt wird.

5. Verfahren nach Anspruch 4, bei dem die Länge des Zeitintervalls auf ein Vielfaches, vorzugsweise das Drei- bis Vierfache, der Dauer eines 1-Bit des Steuerpaketes eingestellt wird und zur Einstellung des Beginns des vorbestimmten Zeitintervalls ein Paket-Endbit eines Steuerpakets herangezogen wird.

6. Verfahren nach einem der vorhergehenden Ansprüche, bei dem ein unmittelbar vor einem vorbestimmten Zeitintervall adressierter Verbraucher sein Rücksendesignal in diesem Zeitintervall auf das Gleis gibt.

7. Verfahren nach einem der vorhergehenden Ansprüche, bei dem die Energie zum Erzeugen des Rücksendesignals einem im Verbraucher vorhandenen Pufferkondensator entnommen wird und das vom Verbraucher erzeugte Rücksendesignal insbesondere durch Modulation eines Stromsignals gewonnen wird.

8. Verfahren nach einem der vorhergehenden Ansprüche, bei dem ein Bitstrom des vom Sensor erfassten Rücksendesignals in eine für einen UART handhabbare Form hinsichtlich Pegel und Polarität umgesetzt wird.

9. Verfahren nach einem der vorhergehenden Ansprüche, bei dem das Rücksendesignal unter Heranziehung der davor über das Gleis übertragenen Steuerinformation ausgewertet wird, insbesondere zur Erzeugung einer "Belegt-Information".

10. Vorrichtung zur digitalen Steuerung von elektrischen Verbrauchern einer Modelleisenbahnanlage mit einer an ein Gleis angeschlossenen Steuereinrichtung, die die mit dem Gleis in Verbindung stehenden Verbraucher durch eine an das Gleis gelegte Rechteckspannung mit Energie versorgt und durch Modulation dieser Rechteckspannung entsprechend einer digitalen Steuerinformation steuert, und mit einer Rücksendesignal-Erzeugungseinrichtung (33, 34, 35, 36) im Verbraucher zur Beaufschlagung des Gleises mit einem Rücksendesignal, **dadurch gekennzeichnet, dass** eine Einrichtung (41; 51, 52; 61; 71, 72) zur Unterbrechung der Versorgung der Verbraucher mit Energie und digitaler Steuerinformation durch die Rechteckspannung über das Gleis während eines vorbestimmten Zeitintervalls vorgesehen ist, dass die Rücksendesignal-Erzeugungseinrichtung (33, 34, 35, 36) des Verbrauchers das rechteckspannungsfreie Gleis innerhalb dieses vorbestimmten Zeitintervalls mit dem Rücksendesignal beaufschlagt und dass ein dem Gleis zugeordneter Sensor (42; 54; 62; 74) das über das Gleis übertragene Rücksendesignal erfasst.

11. Vorrichtung nach Anspruch 10, in welcher die Unterbrechungseinrichtung (41; 51, 52; 61; 71, 72) zwischen der Steuereinrichtung und dem Gleis vorgesehen ist und in welcher Mittel (53; 73) zum Verbinden von Gleisanschlüssen, die von der Steuereinrichtung getrennt sind, über einen Stromsensor (54; 74) vorgesehen sind.

12. Vorrichtung nach Anspruch 11, in welcher eine Auswerteeinrichtung vorgesehen ist, die von der Steuerrichtung die modulierte Rechteckspannung erhält und unter Auswertung der digitalen Steuerinformation ein Steuersignal für die Unterbrechungseinrichtung (41; 51, 52; 61; 71, 72) zum Einleiten und Beenden des vorbestimmten Zeitintervalls erzeugt, und in welcher die Auswerteeinrichtung ein Steuersignal für die Mittel (53, 54; 73) zum Abschliessen des Gleises erzeugt.

13. Vorrichtung nach einem der Ansprüche 10 bis 12, in welcher im Verbraucher eine mit der Rücksendesignal-Erzeugungseinrichtung (33, 34, 35, 36) verbundene Erkennungs- und Steuereinrichtung (32) vorgesehen ist, die anhand der über das Gleis übertragenen digitalen Steuerinformation den Beginn des vorbestimmten Zeitintervalls erkennt und die Rücksendesignal-Erzeugungseinrichtung zur Beaufschlagung des Gleises mit dem Rücksendesignal (33, 34, 35, 36) ansteuert.

14. Vorrichtung nach einem der Ansprüche 10 bis 13, in welcher die Rücksendesignal-Erzeugungseinrichtung (33, 34, 35, 36) eine Stromquelle (34) umfasst, die von einem im Verbraucher vorhandenen Pufferkondensator (33) gespeist wird.

## Claims

1. A method for digitally controlling electrical apparatus of a model train system comprising supplying apparatus having contact to a track with energy by means of a square wave voltage which is applied to the track and controlling the apparatus by modulation of the square wave voltage in accordance with a digital control information, generating a return signal in an apparatus having been supplied with such control information, **characterized by**
interrupting application of the square wave voltage from the track during a predetermined time interval, said apparatus applying the return signal within said predetermined time interval to the track being now square wave voltage free and detecting the return signal transmitted via the track by means of a sensor connected to the track.

2. Method according to claim 1, wherein interruption of the square wave voltage is effected by disconnecting the track from a controller means which generates the modulated square wave voltage.

3. Method according to claim 1 or 2 wherein, when the square wave voltage is interrupted, a current circuit path for said return signal is provided by connecting disconnected track terminals with one another via a current sensor.

4. Method according to one of the preceding claims, wherein said digital control information is transmitted in successive control packets and said predetermined time interval is provided either between two successive control packets or in a portion at the start of a preamble of a control packet.

5. Method according to claim 4, wherein the length of the time interval is adjusted to a multiple of the duration of a 1 bit-period of the control packet and wherein, for adjusting the start of the predetermined time interval, a packet end bit of a control packet is used as time reference.

6. Method according to one of the preceding claims, wherein an apparatus having been addressed immediately prior to such a determined time interval applies its return signal within this time interval to the track.

7. Method according to one of the preceding claims, wherein energy for generating said return signal is drawn from a buffer capacitor provided in the apparatus and wherein the return signal generated by the consumer is generated by modulation of a current signal.

8. Method according to one of the preceding claims, wherein a bit stream of the return signal detected by the sensor is converted into a signal form manageable as to level and polarity by a UART.

9. Method according to one of the preceding claims wherein said return signal is evaluated by referring to control information having been transmitted prior to the control information via the track, particularly to generate an "occupancy information".

10. Device for digitally controlling electrical apparatus in a model train system comprising control means for supplying apparatus having contact to a track with energy by means of a square wave voltage which is applied to the track and for controlling the apparatus by modulation of said square wave voltage in accordance with a digital control information, and a return signal generator means (33, 34, 35, 36) provided in the apparatus for supplying to the track such a return signal, **characterized in that** interrupting means (41; 51, 52; 61; 71, 72) interrupting application of the square wave voltage from the track during a predetermined time interval is provided, and **in that** the return signal generator means (33, 34, 35, 36) of the apparatus is supplying the return signal within said predetermined time interval to the track being now square wave voltage free, and **in that** a sensor (42; 54; 62; 74) connected to the track for detecting the return signal transmitted via the track.

11. Device according to claim 10, wherein said interrupting means (41; 51, 52; 61; 71, 72) is provided between said control unit and said track and wherein track terminal connecting means (53, 73) are provided for connecting track terminals separated from said supply and control unit via a current sensor (54, 74).

12. Device according to claim 11, wherein evaluation means are provided which receives said modulated square wave voltage from said control unit and evaluating said digital control information for generating a control signal for said interrupting means (41; 51, 52; 61; 71, 72) such as to initiate and terminate said predetermined time interval, and wherein said evaluation means generates a control signal for said track terminal connecting means (53, 54; 73).

13. Device according to one of claims 10 to 12 wherein in said apparatus, detecting and control means (32) are provided which are connected to said return signal generator means (33, 34, 35, 36) and which determine based on the digital control information transmitted via the track the start of the predetermined time interval and trigger said return signal generator means to apply the return signal (33, 34, 35, 36) to the track.

14. Device according to one of claims 10 to 13 wherein said return signal generator means (33, 34, 35, 36) comprises a power source (34) powered by a buffer capacitor (33) provided in said apparatus.

## Revendications

1. Procédé pour la commande numérique d'appareils électriques d'une installation de train modèle réduit, dans lequel les appareils en contact avec une voie sont alimentés en énergie par une tension rectangulaire appliquée à la voie et sont commandés par modulation de cette tension rectangulaire en fonction d'une information de commande numérique et un appareil alimente la voie avec un signal de renvoi, **caractérisé en ce que** l'alimentation des appareils en énergie et en information de commande numérique par la tension rectangulaire par l'intermédiaire de la voie est interrompue pendant un intervalle de temps prédéfini, **en ce que** l'appareil alimente la voie sans tension rectangulaire avec le signal de renvoi pendant cet intervalle de temps prédéfini et **en ce que** le signal de renvoi transmis par la voie est détecté par un capteur attribué à la voie.

2. Procédé selon la revendication 1, dans lequel l'interruption de l'alimentation en énergie s'effectue par la séparation de la voie d'un dispositif de commande générant la tension rectangulaire modulée.

3. Procédé selon la revendication 1 ou 2, dans lequel, avec une alimentation en énergie interrompue, un circuit de transmission pour le signal de renvoi est établi par la connexion de raccordements de voie interrompus au moyen d'un capteur de courant.

4. Procédé selon l'une quelconque des revendications précédentes, dans lequel l'information de commande numérique est transmise par des paquets de commande qui se succèdent et l'intervalle de temps prédéfini est placé entre deux paquets de commande successifs ou dans une partie initiale d'un préambule d'un paquet de commandes.

5. Procédé selon la revendication 4, dans lequel la longueur de l'intervalle de temps est réglée sur un multiple, de préférence le triple ou le quadruple, de la durée d'un 1-Bit du paquet de commande et un bit terminal de paquet d'un paquet de commande est utilisé pour le réglage du début de l'intervalle de temps prédéfini.

6. Procédé selon l'une quelconque des revendications précédentes, dans lequel un appareil adressé juste avant un intervalle de temps prédéfini envoie son signal de renvoi dans cet intervalle de temps à la voie.

7. Procédé selon l'une quelconque des revendications précédentes, dans lequel l'énergie pour la génération du signal de renvoi est prélevée sur un condensateur tampon présent dans l'appareil et le signal de renvoi généré par l'appareil est obtenu en particulier par modulation d'un signal de courant.

8. Procédé selon l'une quelconque des revendications précédentes, dans lequel un courant de bit du signal de renvoi détecté par le capteur est converti dans une forme manipulable pour un UART en ce qui concerne le niveau et la polarité.

9. Procédé selon l'une quelconque des revendications précédentes, dans lequel le signal de renvoi est analysé en ayant recours à l'information de commande transmise auparavant par la voie, en particulier pour la génération d'une "information d'occupation".

10. Dispositif pour la commande numérique d'appareils électriques d'une installation de train modèle réduit comprenant un dispositif de commande raccordé à une voie, qui alimente en énergie les appareils en liaison avec la voie par une tension rectangulaire appliquée à la voie et la commande par modulation de cette tension rectangulaire en fonction d'une information de commande numérique, et avec un dispositif de génération de signal de renvoi (33, 34, 35, 36) dans l'appareil pour l'alimentation de la voie avec un signal de renvoi, **caractérisé en ce qu'**un dispositif (41 ; 51, 52 ; 61 ; 71, 72) est prévu pour l'interruption de l'alimentation des appareils en énergie et en information de commande numérique par la tension rectangulaire au moyen de la voie pendant un intervalle de temps prédéfini, **en ce que** le dispositif de génération de signal de renvoi (33, 34, 35, 36) de l'appareil alimente la voie sans tension rectangulaire pendant cet intervalle de temps prédéfini avec le signal de renvoi et **en ce qu'**un capteur (42 ; 54 ; 62 ; 74) attribué à la voie détecte le signal de renvoi transmis par la voie.

11. Dispositif selon la revendication 10, dans lequel le dispositif d'interruption (41 ; 51, 52 ; 61 ; 71, 72) est prévu entre le dispositif de commande et la voie et dans lequel sont prévus des moyens (53 ; 73) pour la connexion de raccordements de voie, qui sont séparés du dispositif de commande, au moyen d'un capteur de courant (54 ; 74).

12. Dispositif selon la revendication 11, dans lequel est prévu un dispositif d'analyse qui reçoit la tension rectangulaire modulée du dispositif de commande et génère avec l'analyse de l'information de commande numérique un signal de commande pour le dispositif d'interruption (41 ; 51, 52 ; 61 ; 71, 72) pour le démarrage et l'expiration de l'intervalle de temps prédéfini, et dans lequel le dispositif d'analyse génère un signal de commande pour les moyens (53, 54 ; 73) pour la fermeture de la voie.

13. Dispositif selon l'une quelconque des revendications 10 à 12, dans lequel il est prévu dans l'appareil un dispositif de reconnaissance et de commande (32) qui est relié au dispositif de génération de signal de renvoi (33, 34, 35, 36), qui reconnaît le début de l'intervalle de temps prédéfini à l'aide de l'information de commande numérique transmise par la voie et active le dispositif de génération de signal de renvoi pour l'alimentation de la voie avec le signal de renvoi (33, 34, 35, 36).

14. Dispositif selon l'une quelconque des revendications 10 à 13, dans lequel le dispositif de génération de signal de renvoi (33, 34, 35, 36) comprend une source de courant (34) qui est alimentée par un condensateur tampon (33) présent dans l'appareil.
